# EUROPEAN PATENT SPECIFICATION

(11) **EP 2 036 469 B1**
(45) Date of publication and mention of the grant of the patent: **25.01.2012**
(21) Application number: 08164442.9
(22) Date of filing: 16.09.2008
(51) Int. Cl.: A47J 31/36

(54) **Machine for espresso coffee with outlet labyrinth**
Espressomaschine mit einem Auslass-Labyrinth
Machine à café expresso avec une sortie en forme de labyrinthe

(30) Priority: 17.09.2007 IT MI20071795
(43) Date of publication of application: 18.03.2009
(73) Proprietor: Tenacta Group S.p.A., 24052 Azzano S. Paolo (BG) (IT)
(72) Inventor: Morgandi, Arturo, 24129 Bergamo (IT)
(74) Representative: Coletti, Raimondo

(56) References cited:
- EP-A- 1 016 364
- EP-A- 1 319 357
- WO-A-2005/053486
- DE-U1- 20 315 193

## Description

This invention relates to an innovative machine for espresso coffee.

Machines are known for producing a coffee beverage from coffee powder, for example contained in a suitable wafer that is permeable to water. The structure of the dispensing head is of fundamental importance for the quality of the beverage. Further, as this head is the part that comes into contact with both the infusion beverage and the coffee powder it is important that it is always appropriately clean and as free as possible from deposits or stagnation. Prior art which is considered useful for understanding the invention is reflected in document EP 1 319 357 A2.

The general object of the present invention is to remedy the drawbacks of prior-art machines by providing a machine provided with a head with improved features both in terms of cleanliness and the quality of the beverage produced.

In view of this object it was decided to make, according to the invention, a machine for making espresso coffee that comprises an infusion chamber with a seat for the coffee powder and which is subjected to infusion, the bottom of the seat comprising a perforated disc for the passage of the coffee infusion to a collecting chamber underneath and which comprises an outlet for the infusion that communicates with a dispensing mouth of the beverage, between the outlet for the infusion and the dispensing mouth there being an overpressure valve that opens when the pressure in the infusion chamber exceeds a preset value, characterised in that downstream of the overpressure valve the beverage directed to the dispensing mouth traverses a narrow annular passage with a passage gap width comprised between 0.2 and 1 mm, preferably around 0.3 mm.

In order to make the explanation of the innovative principles of the present invention and the advantages thereof over the prior art clearer, a possible embodiment applying such principles will be disclosed below with the help of the attached drawings. In the drawings:
- figure 1 is a schematic section view of the infusion zone of a machine made according to the invention;
- figure 2 is a schematic and partial top view of the head of the machine in figure 1;
- figure 3 is an enlarged view of a detail in figure 1 during dispensing of the beverage;
- figure 4 is a view similar to that of figure 1, but in a different operating condition.

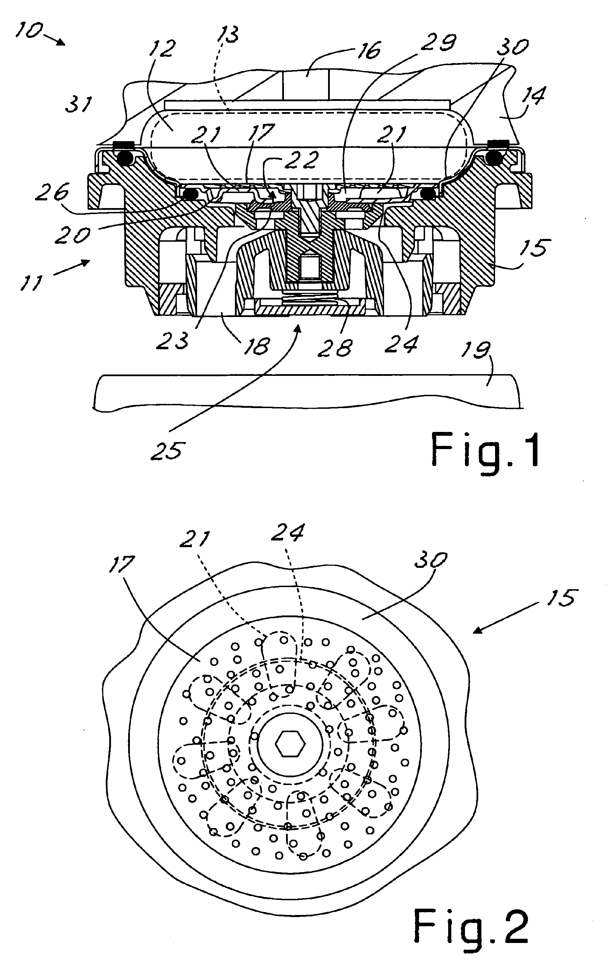

With reference to the figures, in figure 1 a machine is shown schematically, indicated generally by 10, for producing a coffee beverage.

The machine 10 comprises a dispensing head 11 that defines inside an infusion chamber 12 that the coffee powder occupies, which is, for example, contained in a known wafer 13. The wafer generally consists of a porous enclosure for the passage of the infusion water. For the sake of convenience, reference will be made to the use of the wafer.

The dispensing head comprises an upper half 14 and a lower half 15 that are movable towards and away from one another according to known means for opening and closing the chamber 12 and enabling the coffee powder to be introduced or removed.

The upper half is provided with a conduit 16 supplying appropriately heated water 16 through a boiler of the machine that is not shown. The lower half 16 dispenses the beverage formed by the hot water that has traversed the wafer in the chamber. For this object, the lower half has the bottom of the seat 30 for the wafer that is covered by a perforated disc 17 through which the coffee infusion passes to a collecting chamber 29 underneath. The collecting chamber comprises an outlet 22 that communicates with a dispensing mouth 18 that dispenses the beverage to a collecting container 19 underneath (for example, a coffee cup).

In order to enable infusion under permitted pressure (which contributes to obtaining a creamy beverage of excellent quality), between the chamber 29 and the mouth 18 there is an overpressure valve that opens at a preset chamber pressure (for example, around 10 bar).

The collecting chamber 29 below the perforated disc 17 is formed of a collecting surface or conveying disc 20 provided with radial bumps 21 (as can be clearly seen in the dashed line in figure 2) protruding inside the collecting chamber and divide the collecting chamber radially. Such bumps can be a support for the perforated disc 17. The bumps also act for conveying the beverage to the outlet 22, made in the shape of a central annular passage. The passage 22 is closed by a deformable elastomeric membrane 23 that makes said passage valve at preset pressure.

The deformable membrane 23 has a circular crown with a lesser and a greater diameter that rest stably. The upper face of the membrane is subjected to pressure in the chamber 12 and (as can be seen in figure 1) in non-deformed conditions rests against the edge zone of the passage 22 so as to maintain the passage 22 closed.

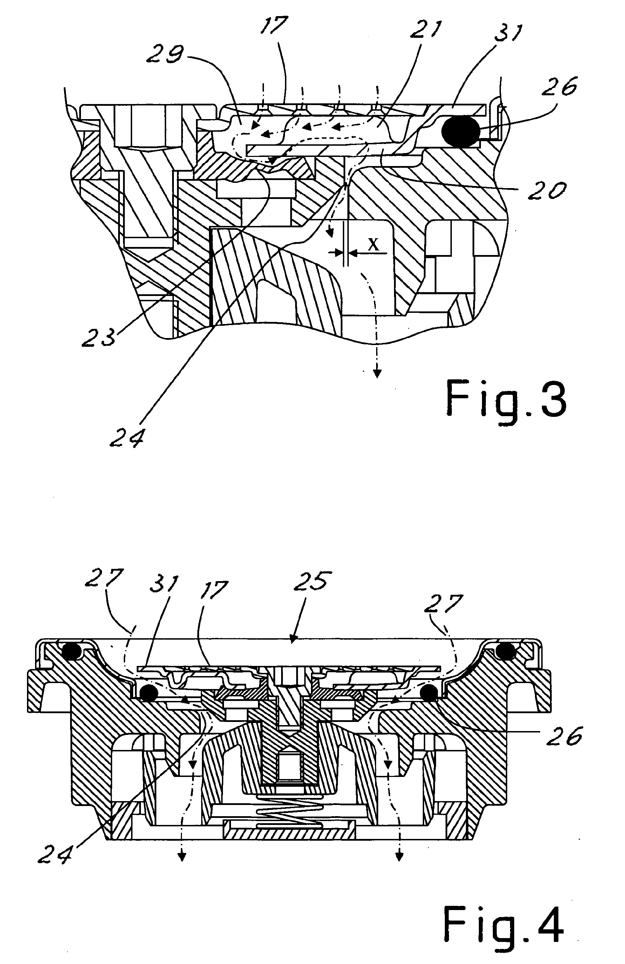

As can be seen well in figure 3, when the machine is operating the coffee beverage passes through the holes of the perforated plate 17 and pushes on the membrane until the pressure in the chamber reaches the preset value that causes the membrane to deform downwards. The beverage can thus go past the valve and is dispensed outside.

Advantageously, as shown by a dot-and-dash line in figure 3, the outlet path is a labyrinth that passes inside the radial bumps 21 and then traverses a narrow annular passage or annular slit 24. For the best results, a space X passage comprised between 0.2 and 1 mm and, advantageously, around 0.3 mm has found to be preferable. It was surprisingly seen that passing the coffee beverage through a similar slit significantly improved the creaminess of the beverage.

The presence of the overpressure valve does not permit the liquid to discharge, which remains at the bottom of the chamber once pressurised dispensing terminates. Further, the tortuous path and with the valve prevents rapid draining of the coffee powders and other solid or semisolid deposits during cleaning cycles without a wafer (i.e. cleaning cycles that are achievable by driving the machine without a wafer to circulate water, to which detergents may have been added, through the chamber to the dispensing outlet).

In the machine according to the invention this is resolved as shown in figure 4, by making the bottom of the seat of the wafer raisable, so as to open between the seat of the wafer and the dispensing mouth 18 a second passage (shown by a dash and dot line) that is more direct and bypasses the overpressure valve 23.

Advantageously, the discharge passage 27 is formed peripherally on the bottom disc 20 that makes a movable unit 25 that is movable together with the perforated disc and the overpressure valve. The movable unit is lifted to move with a peripheral edge 31 thereof from a sealing 0-ring 26 and thus creates in turn a check valve that closes when the chamber is closed with a waver inside. The central unit or part 25 is pushed to rise (for example by approximately 1.5 mm) by a spring 28 that is compressed when the wafer presses on the perforated disc 17. In this way the discharge passage opens each time that the infusion chamber is empty. Advantageously, the entire liftable central unit 25 has a generally mushroom shape with an axially arranged upward thrust spring 28.

As can be seen in figure 4, when the unit 25 is raised the annular passage 24 widens and is part of the discharge passage 27, so as to ensure good cleaning thereof. At this point it is clear how the objects of the invention have been achieved.

Naturally, the above description of an embodiment applying the innovative principles of the present invention is given only by way of example of such innovative principles and must not be taken to limit the protective scope of what is claimed herein. The rest of the machine is *per se* known and may be of any known structure.

## Claims

1. Machine for preparing espresso coffee that comprises an infusion chamber (12) with a seat (30) for the coffee powder and which is subjected to infusion, the bottom of the seat comprising a perforated disc (17) for the passage of the coffee infusion to a collecting chamber (29) underneath and which comprises an outlet for the infusion (22) that communicates with a beverage-dispensing mouth (18) between the outlet for the infusion (22) and the dispensing mouth (18) there being an overpressure valve (23) that opens when the pressure in the infusion chamber exceeds a preset value, **characterised in that** downstream of the overpressure valve (23) the beverage directed to the dispensing mouth traverses a narrow annular passage (24) with passage gap width comprised between 0.2 and 1 mm, preferably around 0.3 mm.

2. Machine according to claim 1, **characterised in that** the bottom of the seat is pushed upwards by a spring to open a discharge passage (27) when the seat (30) is empty.

3. Machine according to claim 1, **characterised in that** the collecting chamber has a bottom formed by a conveying disc (20) on which is placed the perforated disc (17), the conveying disc having a central passage, which forms said outlet (22), on which there is arranged a deformable elastomeric membrane (23) that forms said overpressure valve.

4. Machine according to claims 2 and 3, **characterised in that** the bottom of the seat that is lifted by a spring comprises a central unit (25) that consists of the conveying disc (20) and of the perforated disc (17), this unit having a peripheral edge (31) that in the lowered position closes the bottom of the seat against a peripheral washer (26)

5. Machine according to claim 4, **characterised in that** the liftable central unit (25) generally has a mushroom shape with an upward-thrust axial spring (28).

6. Machine according to claim 3, **characterised in that** the conveying disc (20) comprises raised bumps (21) inside the collecting chamber and which divide the chamber radially.

7. Machine according to claim 6, **characterised in that** downstream of the overpressure valve (23) the beverage directed to the dispensing mouth traverses the interior of the bumps (21).

8. Machine according to claim 2, **characterised in that** when the discharge passage (27) opens the annular passage (24) widens and is part of the discharge passage (27).

## Patentansprüche

1. Maschine zur Zubereitung von Espresso umfassend eine Brühkammer (12) mit einem Sitz (30) für das zu brühende Kaffeepulver, wobei der Boden des Sitzes eine Lochscheibe (17) für den Durchlauf des gebrühten Kaffees in eine darunter befindliche Sammelkammer (29) umfasst, und einen Auslass für den gebrühten Kaffee (22), der mit einer Getränkeabgabeöffnung (18) verbunden ist, wobei zwischen dem Auslass für den gebrühten Kaffee (22) und der Abgabeöffnung (18) ein Überdruckventil (23) vorgesehen ist, das sich öffnet, wenn der Druck in der Brühkammer einen vorgegebenen Wert überschreitet, **dadurch gekennzeichnet, dass** das zu der Abgabeöffnung fließende Getränk nach dem Überdruckventil (23) einen engen, ringförmigen Durchlass (24) mit einer Durchlassspaltbreite zwischen 0,2 und 1 mm, vorzugsweise 0,3 mm, passiert.

2. Maschine nach Anspruch 1, **dadurch gekennzeichnet, dass** der Boden des Sitzes durch eine Feder nach oben gedrückt wird, um einen Ausstoßdurchlass (27) zu öffnen, wenn der Sitz (30) leer ist.

3. Maschine nach Anspruch 1, **dadurch gekennzeichnet, dass** die Sammelkammer einen Boden aufweist, der durch eine Förderscheibe (20) gebildet wird, auf der die Lochscheibe (17) angeordnet ist, wobei die Förderscheibe einen mittleren Durchlass aufweist, die den Auslass (22) bildet, auf dem eine verformbare, Elastomermembran (23) angeordnet ist, die das Überdruckventil bildet.

4. Maschine nach Anspruch 2 oder 3, **dadurch gekennzeichnet, dass** der Boden des Sitzes, der durch eine Feder angehoben wird, eine Zentraleinheit (25) umfasst, die aus der Förderscheibe (20) und der Lochscheibe (17) besteht, wobei diese Einheit einen umlaufenden Rand (31) aufweist, der in der abgesenkten Stellung den Boden des Sitzes gegen die umlaufende Scheibe (26) schließt.

5. Maschine nach Anspruch 4, **dadurch gekennzeichnet, dass** die hebbare Zentraleinheit (25) im Allgemeinen pilzförmig ist und eine nach oben drückende axiale Feder (28) besitzt.

6. Maschine nach Anspruch 3, **dadurch gekennzeichnet, dass** die Förderscheibe (20) Auswölbungen (21) in der Sammelkammer umfasst, die die Kammer radial unterteilen.

7. Maschine nach Anspruch 6, **dadurch gekennzeichnet, dass** das zu der Abgabeöffnung fließende Getränk nach dem Überdruckventil (23) das Innere der Auswölbung (21) durchfließt.

8. Maschine nach Anspruch 2, **dadurch gekennzeichnet, dass** sich der ringförmige Durchlass (24) beim Öffnen des Ausstoßdurchlasses (27) erweitert und Teil des Ausstoßdurchlasses (27) wird.

## Revendications

1. Machine pour préparer du café expresso qui comprend une chambre d'infusion (12) avec un siège (30) pour la poudre de café et qui est soumise à une infusion, le fond du siège comprenant un disque perforé (17) pour le passage de l'infusion de café vers une chambre de collecte (29) en dessous et qui comprend une sortie pour l'infusion (22) qui communique avec une bouche de distribution de boisson (18) entre la sortie pour l'infusion (22) et la bouche de distribution (18), une soupape de surpression (23) s'y trouvant laquelle s'ouvre lorsque la pression dans la chambre d'infusion dépasse une valeur prédéfinie, **caractérisée en ce qu'**en aval de la soupape de surpression (23), la boisson dirigée vers la bouche de distribution traverse un passage annulaire étroit (24) avec une largeur d'interstice de passage comprise entre 0,2 et 1 mm, de préférence environ 0,3 mm.

2. Machine selon la revendication 1, **caractérisée en ce que** le fond du siège est poussé vers le haut par un ressort pour ouvrir un passage d'évacuation (27) lorsque le siège (30) est vide.

3. Machine selon la revendication 1, **caractérisée en ce que** la chambre de collecte a un fond formé par un disque de convoyage (20) sur lequel est placé le disque perforé (17), le disque de convoyage ayant un passage central, qui forme ladite sortie (22), sur lequel est disposée une membrane élastomère déformable (23) qui forme ladite soupape de surpression.

4. Machine selon les revendications 2 et 3, **caractérisée en ce que** le fond du siège qui est soulevé par un ressort comprend une unité centrale (25) qui est constituée du disque de convoyage (20) et du disque perforé (17), cette unité ayant un bord périphérique (31) qui, dans la position abaissée, ferme le fond du siège contre une rondelle périphérique (26).

5. Machine selon la revendication 4, **caractérisée en ce que** l'unité centrale soulevable (25) a généralement une forme de champignon avec un ressort axial de poussée ascendante (28).

6. Machine selon la revendication 3, **caractérisée en ce que** le disque de convoyage (20) comprend des bosses surélevées (21) à l'intérieur de la chambre de collecte et qui divisent la chambre radialement.

7. Machine selon la revendication 6, **caractérisée en ce qu'**en aval de la soupape de surpression (23), la boisson dirigée vers la bouche de distribution traverse l'intérieur des bosses (21).

8. Machine selon la revendication 2, **caractérisée en ce que** lorsque le passage d'évacuation (27) s'ouvre, le passage annulaire (24) s'élargit et fait partie du passage d'évacuation (27).
